# EUROPEAN PATENT APPLICATION

(11) **EP 0 670 503 A1**
(43) Date of publication of application: **06.09.1995**
(21) Application number: 95850040.7
(22) Date of filing: 21.02.1995
(51) Int. Cl.: G01S 5/14

(54) **Alarm transmitter with radio locating device**

(30) Priority: 03.03.1994 SE 9400759
(71) Applicant: TELIA AB, S-123 86 Farsta (SE)
(72) Inventor: Wichtel, Erik, SE-217 47 Malmö (SE)
(74) Representative: Karlsson, Berne

(57) **Abstract**

An arrangement for a radiocommunications system includes an alarm module with alarm transmitter which, as a function of an activation, causes an alarm to be transmitted via equipment in a vehicle, via the system to a central unit. Position determination can be carried out by means of a GPS receiver which, together with the transmitter, can be carried by a person/individual in difficulty, who is associated with the vehicle, for the purpose of establishing, by means of the GPS receiver, his exact position, with position indication on alarm activation.

## Description

### TECHNICAL FIELD

Reference is made to the preamble of Patent Claim 1 attached.

### PRIOR ART

A mobile production control application with the name Mobiflex is already known. The latter includes an alarm module. The alarm module includes a portable alarm transmitter in the form of a box which is the size of a cigarette packet and which has a single button on it. By pressing the button, the transmitter sends a 5-digit code with CCIR tone signalling on the mobitex band. This signalling is included as such in the mobitex specification.

In utility vehicles it is possible to use a mobitex radio and a GPS receiver. The GPS receiver determines the position of the vehicle and transmits the information to the mobitex radio when an alarm from the alarm transmitter is detected by the mobitex radio. The mobitex radio then sends an alarm with position data to the alarm centre.

A vehicle tracking and security system is already known from US 5 223 844. The system comprises an alarm unit which is placed in a vehicle and which transmits alarm information to an alarm centre if an alarm situation occurs (for example, an accident or the theft of a vehicle). By using a GPS receiver, the alarm unit can additionally transmit the position of the vehicle to the centre. The alarm unit is further coupled to a mobile telephone transceiver in order to be able to communicate the abovementioned information via a conventional mobile telephone network. The alarm unit can also be equipped with a portable transmitter with an alarm button in order to be able to activate the alarm unit in a wireless fashion.

WO 93/16452 describes a personal security system consisting, inter alia, of a mobile unit which is capable of transmitting alarm signals, together with position information, via a cellular telephone system to a central station. The mobile unit, which is intended to be placed in a vehicle, utilizes a navigation technique such as, for example, GPS or LORAN-C. The information which is transmitted in the event of an alarm situation, and which may be transmitted via a cellular mobile telephone system or a communications satellite, is used in order to locate the distressed party on a digital map. The mobile unit can also be designed as a portable unit.

US 5 043 736 shows a cellular position finding system. The system comprises, inter alia, a portable unit which can be used both as GPS unit and cellular mobile telephone. The unit is capable of transmitting position finding information to a central base unit via a cellular mobile telephone system.

US 4 144 497 and 4 539 706 show that it is known to use a mobile transceiver in order to relay signals from and to a hand-held transceiver.

### DESCRIPTION OF THE INVENTION

### TECHNICAL PROBLEM

Various methods have been proposed for "taking a bearing on" the alarm transmitter so that the search for the distressed party can proceed quickly. Taking a bearing on the alarm signal would give a position which is 1.80 metres in diameter, which is completely unmanageable in the field. A further proposal which has been made is to place another transmitter in the alarm transmitter specifically for the bearing signal, a so-called game beacon, which is used on hunting dogs and for scientific purposes (such as to track polar bears in the Arctic). This solution doubles the cost of the alarm transmitters. Both solutions additionally require that a large number of beacons are purchased and that personnel are trained so that they are able to use the equipment, for which reasons these solutions are not especially attractive.

The technical problem is to find a solution which cuts down on investments and training costs, but which means that the search for individuals in difficulties still proceeds quickly.

### SOLUTION

Reference is made to the patent claims attached.

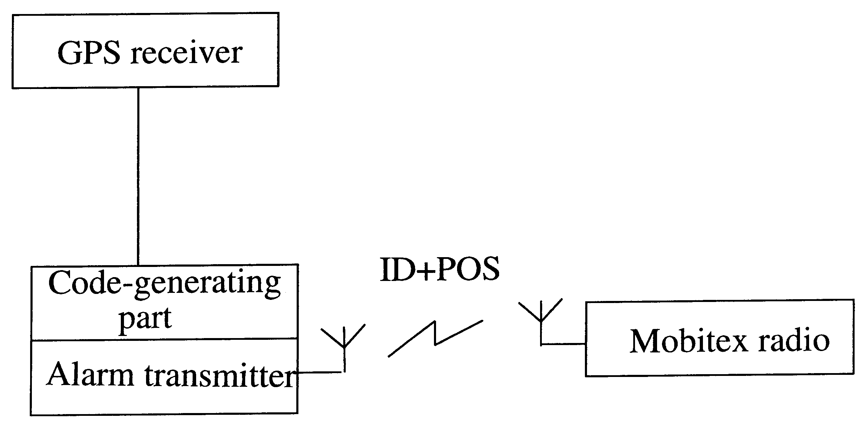

### DESCRIPTION OF THE FIGURE

The invention will be described with reference to the Figure, which shows the portable alarm transmitter transmitting a position to the mobitex radio, which can then communicate an alarm, with position, onwards to the public network.

### DETAILED EMBODIMENT

The invention is based on the position of the individual being determined by means of the GPS receiver, instead of the vehicle. The identity which the alarm transmitter sends with tone signalling is supplemented with a position.

Small, handy and portable high-performance GPS receivers are available at the present time. Silva's new GPS compass is no bigger than a large box of matches and can easily be carried about in the field. Such a product can additionally be used in the field for navigation and for map documentation in connection with vehicles of the type in question, for example utility vehicles.

The portable GPS receiver can be mounted releasably in the vehicle or can be carried on one's person the whole time. The installation depends entirely on the required use, although there are in fact products which cover the alternatives.

The invention consists in integrating the GPS receiver with the alarm transmitter and in supplementing the transmitted identity with a position. The alarm transmitter has its own battery, for safety reasons, since the GPS receiver consumes much more current by comparison.

Since it is the individual in difficulties whose position is determined, instead of the vehicle's, there is no longer a need for bearings to be taken. This can be done because the GPS receiver, which still needs to be purchased, is made portable, which fact does not represent an extra cost. The alarm transmitter circuits are small, and it should be possible to integrate them without any problem. Software changes must be made to the alarm transmitter's tone generation, so that the position can be transmitted too. Similarly, changes have to be made to the receiver software, so that the mobitex radio is able to identify not only the identity, but also the position.

In connection with searching for persons who are calling via emergency transmitters in the field and who are using in-vehicle public radio for further communication to the alarm centre, this invention is characterized in that the GPS receiver is removed from the actual radio and is made wireless and mobile by combining it with the portable alarm transmitter.

The invention is not limited to the above example. Instead, reference is made to the attached patent claims.

## Claims

1. Arrangement for a radiocommunications system, for example a system of the MOBITEX type, and including an alarm module with alarm transmitter which, as a function of an activation, causes an alarm to be transmitted via equipment in a vehicle, via the system to a central unit, in addition to which a position determination can be carried out by means of a GPS receiver, characterized in that the GPS receiver and the transmitter can be carried by a person/individual in difficulty, who is associated with the vehicle, for the purpose of establishing, by means of the GPS receiver, his exact position, with position indication on alarm activation.

2. Arrangement according to Patent Claim 1, characterized in that the GPS receiver and the alarm transmitter are integrated in one unit.

3. Arrangement according to Patent Claim 1 or 2, characterized in that the said receiver and alarm transmitter parts are each assigned their own respective battery or equivalent energy source.

4. Arrangement according to Patent Claim 1, 2 or 3, characterized in that the GPS receiver is arranged removably in the vehicle and is provided with a battery charging function which is activated when the receiver is in position in the vehicle.

5. Arrangement according to any one of the preceding patent claims, characterized in that a first program which is used for the tone signal generation of the alarm transmitter is designed also to permit transmission of the current position.

6. Arrangement according to any one of the preceding patent claims, characterized in that the GPS receiver is designed with a second program which allows the system radio to identify not only the identity, but also the position.

7. Arrangement according to any one of the preceding patent claims, characterized in that the portable alarm transmitter transmits its position to the system radio, which communicates the alarm, with the position, onwards in the system, which can consist of the public network.

8. Arrangement according to any one of the preceding patent claims, characterized in that the alarm transmitter and the receiver are the size of matchboxes.

9. Arrangement according to Patent Claim 8, characterized in that the alarm transmitter is provided with a single activation member, by means of which activation takes place.

10. Arrangement according to any one of the preceding patent claims, characterized in that, when the alarm transmitter is activated, a five-digit code with tone signalling is output on the mobitex band/the system band or connection.
